# FASCICULE DE BREVET EUROPEEN

(11) **EP 2 489 016 B1**
(45) Date de publication et mention de la délivrance du brevet: **07.03.2018**
(21) Numéro de dépôt: 10782661.2
(22) Date de dépôt: 14.10.2010
(51) Int. Cl.: G07D 7/12, G07D 7/00, G06K 5/00, G07D 7/005

(54) **PROCÉDÉ ET DISPOSITIF DE CONTROLE D'UN DOCUMENT SÉCURISÉ**
VERFAHREN UND VORRICHTUNG ZUR ÜBERPRÜFUNG EINES GESICHERTEN DOKUMENTS
METHOD AND DEVICE FOR CHECKING A SECURED DOCUMENT

(30) Priorité: 15.10.2009 FR 0904948
(43) Date de publication de la demande: 22.08.2012
(73) Titulaire: SURYS, 77607 Marne la Vallee Cedex 3 (FR)
(72) Inventeur: SOUPARIS, Hugues, F-75012 Paris (FR)
(74) Mandataire: Bouvier, Thibault
(86) Numéro de dépôt international: PCT/FR2010/052180
(87) Numéro de publication internationale: WO 2011/045543

(56) Documents cités:
- EP-A2- 1 852 752
- WO-A1-2006/129475
- US-A1- 2005 175 230
- US-A1- 2007 228 166
- US-A1- 2008 144 947

## Description

### DOMAINE TECHNIQUE

La présente invention se rapporte au domaine de l'authentification d'objets, par exemple de documents tels que des passeports ou de produits risquant d'être contrefaits. Pour ce faire, il est courant que de tels objets (documents ou produits) comportent des éléments de sécurité optiquement variables susceptibles d'être contrôlés par un contrôleur en vue de déterminer l'authenticité desdits objets. Un contrôleur peut être par exemple une personne officielle en charge du contrôle, ou une personne non officielle par exemple un consommateur.

Par élément de sécurité optiquement variable, on entend un élément dont au moins un des ses aspects change lorsqu'il est soumis à un mouvement.

Le mouvement peut être un mouvement de rotation, autour d'un axe horizontal (axe des X), d'un axe vertical (axe des Y), et/ou de rotation dans le plan de l'objet sécurisé (axe des Z) .

Les changements d'aspects peuvent porter sur tout ou partie des éléments suivants :
- changement de couleur en fonction de l'orientation
- changement d'angles de vues d'un hologramme 3D
- déplacement d'un élément d'image
- changement d'aspect de l'image
- effacement d'une image et remplacement par une autre
- etc...

Le document EP1852752 divulgue un procédé et un système d'authentification avec une source lumineuse pour éclairer un support d'enregistrement, une caméra pour imager une image du support, ou une unité de modification modifie la relation optique entre la source, la caméra et le support pour prendre une série d'images dans certains conditions d'illumination, lesdites images étant comparées avec les images de référence dans les mêmes conditions. La présente invention se rapporte plus particulièrement au contrôle d'un objet sécurisé par au moins un élément de sécurité apte à générer des effets optiques en fonction de son orientation et des mouvements qui lui sont appliqués..

La plupart des documents officiels, tels que les documents d'identité, sont la cible d'un grand nombre de tentatives de contrefaçon ou de falsification des données qui y sont inscrites pour les remplacer et ainsi détourner le document de l'usage prévu initialement.

De même la contrefaçon d'objets touche également des produits, tels que par exemple les produits de marque, les produits pharmaceutiques, les produits de luxe, les produits électroniques, etc...

La contrefaçon touche aussi les documents de valeurs tels que les billets de banque, les chèques, les billets de spectacle etc...

De tels objets peuvent être sécurisés en y apposant des éléments de sécurités optiquement variables en fonction de leur orientation et/ou des conditions d'éclairage auxquelles ils sont soumis, comme par exemple des hologrammes, dont le contrôle optique permet l'authentification. L'invention se situe donc dans le cadre du contrôle visuel de l'authenticité des éléments optiquement variables utilisés comme authentifiant dans la lutte contre la contrefaçon.

Aussi, selon un premier de ses objets, l'invention concerne un procédé de contrôle optique, pour l'authentification par un contrôleur tel que défini par la revendication 1. L'élément de sécurité nominal associé peut être spécialement mis à la disposition d'un contrôleur en vue de cette vérification par comparaison.

Le contrôleur peut dès lors, en disposant l'un à côté de l'autre l'élément à authentifier et l'élément nominal, vérifier que ceux-ci sont bien identiques grâce à la simulation. Pour se faire, étant donnée la variation des propriétés optiques de l'élément en fonction de son orientation, il lui suffit de conférer aux deux éléments des orientations identiques ou de leur appliquer des mouvements identiques et vérifier à chaque fois que les propriétés optiques sont toujours les mêmes. Après plusieurs orientations ou mouvements et comparaisons, l'élément de sécurité sera considéré par le contrôleur comme authentique si chacune des comparaisons a révélé que les deux éléments étaient identiques.

Ainsi typiquement, il est possible de contrôler le changement de couleur d'un élément d'image lors d'une rotation autour d'un axe horizontal, le déplacement d'un élément d'image obtenu par exemple pour une rotation autour de l'axe des Y...

Le contrôleur dispose ainsi d'un moyen de vérifier l'authenticité d'un objet avec un niveau de sécurisation d'autant plus élevé que les propriétés optiques de l'élément sont discernables à l'oeil nu ou avec des moyens optiques appropriés (loupe ou capteurs par exemple). En outre, afin d'augmenter encore le niveau de sécurisation, on peut prévoir en outre que cet élément ne puisse être arraché du document ou du produit - en vue de le disposer frauduleusement sur un autre document ou produit - sans qu'il ne soit intégralement détruit, ce qui permet d'éviter des contrefaçons par simple remplacement de l'élément de sécurité.

L'invention rend la vérification de l'authenticité du document ou du produit particulièrement simple, et permet grâce à la simulation mise à disposition de chaque contrôleur, l'affichage et l'animation de la simulation de tout élément de sécurité optiquement variable pour peu que la simulation ait été mise à disposition du contrôleur soit par envoi dédié, soit par enregistrement dans une base de données sécurisé où tous les effets sont stockés. Grâce à cette dernière les contrôleurs disposent d'une plus grande autonomie puisqu'ils peuvent à tout moment disposer des dernières mises à jour (nouvelle animation correspondant à un nouveau produit ou à une évolution de l'élément optiquement variable..

Ainsi, grâce à l'invention, l'authenticité d'un produit ou d'un document comportant un élément de sécurité optiquement variable est effectuée par comparaison avec un référentiel particulièrement fiable.

Le procédé peut comprendre en outre une étape consistant à :
- générer ladite simulation localement sur le dispositif de contrôle (1) ou à distance de celui-ci, le procédé comprenant dans ce cas en outre une étape de téléchargement de ladite simulation sur ledit dispositif (1).

On peut prévoir également en outre une étape consistant à :
- stocker, éventuellement au préalable, ladite simulation dans une mémoire accessible (ou physiquement reliée) audit dispositif (1).

Dans un mode de réalisation, le procédé comprend en outre une étape préalable consistant à :
- sélectionner ladite simulation (4) d'un élément de sécurité nominal associé à l'objet sécurisé (10) parmi un ensemble de simulations d'éléments de sécurité nominaux associés à d'autres objets sécurisés.

De préférence, l'étape de sélection comprend des étapes consistant à :
- identifier le type ou la référence dudit élément de sécurité (11) par la mesure d'un paramètre optique et/ou la lecture d'un identifiant dudit élément de sécurité (11), et
- rechercher le type ou la référence correspondant parmi ledit ensemble de simulations d'éléments de sécurité nominaux.

Alternativement, l'étape de sélection comprend des étapes consistant à :
- saisir sur des moyens de saisie (5',5") dudit dispositif (1), un identifiant dudit élément de sécurité (11), et
- rechercher le type ou la référence correspondant parmi ledit ensemble de simulations d'éléments de sécurité nominaux.

Dans un mode de réalisation, le procédé comprend en outre une étape consistant à :
- appliquer une orientation et/ou un mouvement relatif au contrôleur sensiblement identique(s) audit élément de sécurité (11) et audit module du dispositif de contrôle (1).

De préférence, les mouvements relatifs au contrôleur dudit élément de sécurité (11) et dudit module du dispositif de contrôle (1) sont sensiblement synchrones.

Dans un mode de réalisation, l'étape de comparaison des effets optiques comprend l'estimation et/ou la détection par le contrôleur d'au moins un des aspects suivants :
- changement de couleur en fonction de l'orientation,
- changement d'angles de vues d'un hologramme tridimensionnel,
- déplacement d'un élément d'une image dudit élément de sécurité (11),
- changement d'aspect d'un élément d'image dudit élément de sécurité (11),
- effacement d'une image dudit élément de sécurité (11) et remplacement éventuel par une autre.

Dans un mode de réalisation, l'étape de comparaison est mise en oeuvre dynamiquement, la simulation (4) dudit élément de sécurité nominal affichée sur ledit écran de visualisation (2) reproduisant l'orientation et/ou le mouvement dudit module à chaque instant.

Selon un autre de ses objets, l'invention concerne un programme d'ordinateur, comprenant des instructions de code de programme pour l'exécution des étapes du procédé selon l'invention, lorsque ledit programme est exécuté sur un ordinateur.

L'invention concerne également un dispositif de contrôle optique tel que revendiqué dans la revendication 12. De préférence, les moyens (3) de mesure de l'orientation et/ou de mouvement dudit module comprennent un senseur de position et/ou de mouvement (3) intégré audit dispositif (1).

De préférence, l'écran de visualisation (2) est intégré audit dispositif (1), ledit dispositif (1) pouvant être autonome et au moins en partie portatif. Avantageusement, au moins une simulation (4) se présente sous la forme :
- d'une série d'images de synthèse obtenues par simulation informatique du comportement optique de l'élément de sécurité nominal, ou
- d'une séquence vidéo filmée à partir de l'élément de sécurité nominal, et/ou
- d'une série de poses fixes obtenues à partir de l'élément de sécurité nominal.

En particulier, le dispositif de contrôle au moins en partie portatif, peut être tel qu'un téléphone intelligent, de type multimédia, plus connus sous l'anglicisme « smart phone » ou un assistant électronique portable, de sorte qu'un contrôleur humain puisse vérifier un document à l'oeil nu de manière aisée.

A cet effet, la présente invention propose un dispositif de contrôle d'un document ou d'un produit sécurisé muni d'au moins un élément de sécurité apte à générer des effets optiques fonctions de son orientation et des mouvements auquel il est soumis, comportant un écran de visualisation, un capteur de déplacement et/ou de position et des moyens de génération et d'affichage sur l'écran d'une image animée de la simulation de l'élément de sécurité optiquement variable nominal associé au document ou au produit sécurisé, l'affichage étant piloté de façon interactive grâce à un capteur de position et/ou de mouvement, de manière à permettre une comparaison entre cet élément l'objet, produit ou document, à contrôler et cette simulation en fonction des mouvements et des orientations respectives qui leur sont appliqués.

Par capteur de mouvement / position, on entend notamment tout capteur de type accéléromètre, capteur de tilt (rotation autour d'un axe), capteur d'orientation ou autre permettant de détecter tout mouvement du dispositif (dans les 3 dimensions de l'espace) lors de la manipulation par le contrôleur. Il fournit les informations relatives aux variations d'orientation du dispositif.

Grâce à l'invention, un contrôleur dispose d'un outil de contrôle capable de prendre en compte toute mise à jour récente d'un élément de sécurité à vérifier. En effet, le dispositif de contrôle selon l'invention peut générer et afficher une simulation de l'élément de sécurité nominal correspondant à l'élément à vérifier. Cette simulation peut être soit intégrée à des moyens de stockage du dispositif, soit téléchargée via un serveur sécurisé dédié. Dès lors, un élément de sécurité nominal qui ne serait pas à la disposition du contrôleur peut être facilement et quasi instantanément récupéré en vue d'effectuer le contrôle de rigueur.

De plus, le niveau de sécurisation de l'objet n'est nullement amoindri par rapport à d'autres solutions de l'état de la technique, dans la mesure où le dispositif utilise un senseur de position et / ou de mouvement qui intègre l'orientation spatiale du dispositif afin d'afficher sur l'écran une simulation correspondant à l'intensité lumineuse et la coloration de l'élément nominal pour l'orientation ou à l'effet d'animation ou de perception du relief similaire à celle du dispositif. Ainsi, le dispositif selon l'invention se comporte comme un élément de sécurité nominal en terme de manipulation par le contrôleur. Ce dernier peut donc manipuler le dispositif, ce qui est équivalent à manipuler l'élément nominal simulé pour le comparer à l'élément à vérifier, de sorte qu'il est équivalent d'utiliser ce dispositif et un élément nominal sur un support physique.

De préférence, la simulation affichée sur l'écran correspond à celle nominalement prévue pour un élément de sécurité disposé suivant une orientation sensiblement identique à l'orientation du dispositif par rapport à une orientation de référence. Cette référence peut ne pas être celle pour une orientation nulle dans les trois directions de l'espace afin de tenir compte de ce que le contrôleur considère comme sa position de départ pour la vérification du document.

Selon un premier mode de mise en oeuvre, le dispositif comprend des moyens de communication avec un serveur via un réseau de communication pour le téléchargement de la simulation d'un élément de sécurité nominal. Ce serveur peut être régulièrement mis à jour pour intégrer tout nouvel élément de sécurité et le dispositif de contrôle peut donc incorporer directement de telles mises à jour.

Dans ce dernier cas, la connexion entre les moyens de communication et le serveur est avantageusement une connexion sécurisée.

Selon un deuxième mode de mise en oeuvre, le dispositif comprend des moyens de stockage d'informations apte à contenir au moins une simulation d'un élément de sécurité nominal. L'élément nominal est ainsi directement disponible sur le dispositif, ce qui économise le temps de téléchargement éventuel de sa simulation.

Concernant la recherche d'une simulation d'un élément de sécurité nominal, deux modes de réalisation peuvent être privilégiées.

Selon un premier mode de réalisation, le dispositif comprend des moyens de saisie de données aptes à permettre la recherche d'une simulation d'un élément de sécurité nominal par saisie de la référence alphanumérique de cet élément nominal. En effet, un élément de sécurité, tel qu'un hologramme, dispose fréquemment d'une référence, que le contrôleur n'aura plus qu'à saisir dans le dispositif afin d'accéder à la simulation de l'élément de sécurité nominal correspondant.

Selon un deuxième mode de réalisation, le dispositif comprend des moyens de capture aptes à permettre la recherche d'une simulation d'un élément de sécurité nominal par capture de l'élément de sécurité à contrôler et reconnaissance automatique de l'élément nominal correspondant. Un tel moyen dispense ainsi le contrôleur de la saisie d'une référence d'élément de sécurité, dans la mesure où la capture d'une seule image suffit à accéder à la simulation souhaitée.

Aux fins d'une meilleure sécurisation du document et d'éviter différents types de fraudes, le dispositif comprend des moyens de contrôle de l'accès à la simulation d'un élément de sécurité nominal en fonction des droits d'accès associés au détenteur de ce dispositif et préalablement déterminés.

De préférence, le dispositif comprend des moyens de gestion de l'affichage de la simulation d'un élément de sécurité nominal sur l'écran de visualisation. Cette gestion peut consister en un réglage de divers paramètres d'affichage.

En outre, ces moyens de gestion de l'affichage prennent avantageusement en compte les conditions d'éclairage de l'élément de sécurité à contrôler.

Par ailleurs, ces moyens de gestion de l'affichage peuvent également intégrer une fonction d'agrandissement de la simulation affichée sur l'écran de visualisation.

Concernant la simulation d'un élément de sécurité nominal, il peut être prévu que celle-ci se présent sous la forme :
- d'une série d'images de synthèse obtenues par simulation informatique du comportement optique de l'élément de sécurité nominal, ou
- d'une séquence vidéo filmée à partir de l'élément de sécurité nominal, ou enfin
- d'une série de poses fixes obtenues à partir de l'élément de sécurité nominal.

Avantageusement, le dispositif est agencé de manière à être au moins en partie portatif, et de préférence intégralement portatif.

La présente invention permet donc le contrôle d'un objet sécurisé, par exemple un document de valeur, un document d'identité ou un produit de marque, muni d'au moins un élément de sécurité apte à générer des effets optiques fonctions de son orientation, par :
- la génération, sur un dispositif de contrôle, d'une simulation de l'élément de sécurité nominal associé au document sécurisé,
- l'affichage de la simulation sur un écran de visualisation du dispositif, l'affichage étant fonction de son orientation ou du mouvement qui lui est appliqué déterminée par un senseur de position et/ou de mouvement intégré au dit dispositif, et
- la comparaison entre l'élément du document à contrôler et la simulation en fonction de leurs orientations respectives.

Pour les mêmes raisons que celles évoquées concernant le dispositif de contrôle décrit ci-dessus, ce procédé permet de prendre en compte toute mise à jour récente d'un élément de sécurité à vérifier sans que le niveau de sécurisation du document n'en soit nullement amoindri par rapport à d'autres solutions de l'état de la technique.

### BREVE DESCRIPTION DES DESSINS

L'invention sera mieux comprise à la lecture de la description détaillée d'un exemple non limitatif de réalisation, accompagnée de figures représentant respectivement :
- la figure 1, un exemple de document sécurisé muni d'un élément de sécurité,
- la figure 2, un schéma d'un dispositif de contrôle selon l'invention, configuré pour communiquer avec un serveur dédié, et
- les figures 3 et 4, des schémas d'utilisation du dispositif de contrôle selon l'invention lors d'une comparaison avec un élément de sécurité à contrôler, selon différentes orientations de ceux-ci.

Sur les figures mentionnées ci-dessus, des références identiques se rapportent, sauf indication contraire, à des caractéristiques techniques similaires.

### EXPOSE DETAILLE DE MODES DE REALISATION PARTICULIERS

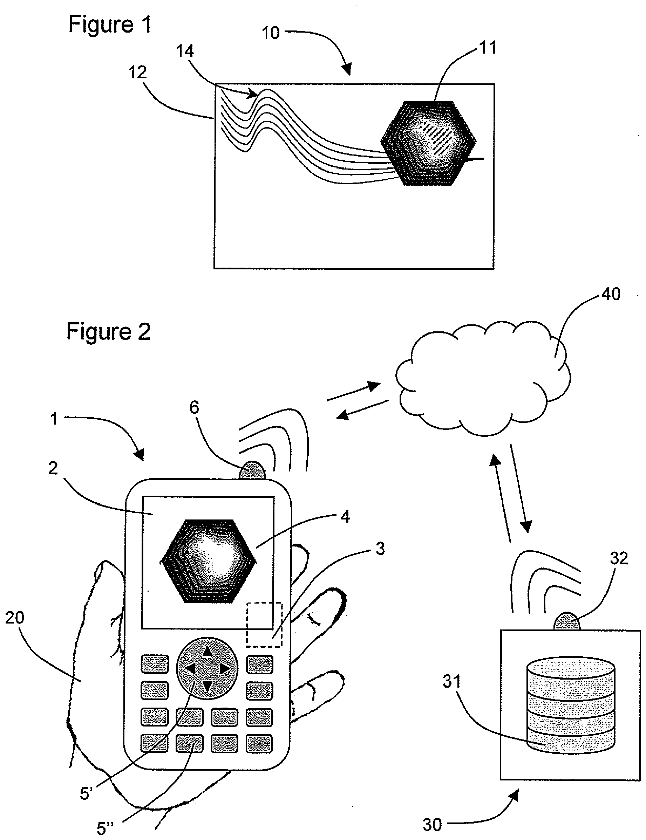

La figure 1 représente un exemple d'objet sécurisé 10 muni d'un élément de sécurité optiquement variable 11 disposé sur un support physique 12. Cet élément 11 peut se présenter sous la forme d'un composant optique comprenant des moyens aptes à générer des effets optiques. De tels moyens peuvent en outre comprendre une couche réfléchissante transparente ou opaque et une couche estampée comportant une structure optique à microreliefs. Cette structure peut être constituée d'un réseau de diffraction produisant des effets de diffraction visibles à l'ordre zéro ou à l'ordre un. On dispose alors d'un hologramme dont les propriétés optiques - intensité lumineuse, couleurs, effets d'animation, angle de visons - varient en fonction de son orientation, des mouvements qui lui sont appliqués ainsi que de ses conditions d'éclairage.

On dispose avantageusement en outre sur le support 12 au moins un élément graphique non variable 14, par exemple imprimé. Cet élément graphique non variable 14 permet par exemple de situer l'élément de sécurité graphiquement variable 11 sur le support 12 et de donner un effet de contraste avec celui-ci, ce qui est particulièrement avantageux dans le cas où l'élément de sécurité optiquement variable 11 est un hologramme transparent ou partiellement dé-métallisé, ce qui ajoute également un niveau de sécurité à l'objet 10.

La vérification de l'authenticité de l'objet sécurisé 10 implique l'analyse de l'élément 11 par un contrôleur. A ce titre, il convient de noter qu'un objet peut comporter plusieurs types d'éléments de sécurité, auquel cas le contrôleur devra en analyser au moins un, voire l'intégralité de ceux-ci.

Pour réaliser cette vérification selon la présente invention, il est utilisé un dispositif de contrôle schématiquement représenté en figure 2 et décrit ci-après.

Ce dispositif 1 comporte un boîtier intégrant un écran de visualisation 2, un senseur de position 3 (en pointillés), des moyens de saisie de données 5' et 5", des moyens de communication 6 avec un réseau externe, ainsi que des moyens de génération et d'affichage (non représenté) d'une simulation d'un élément de sécurité nominal.

Le boîtier du dispositif 1 est conçu afin d'être aisément manipulé par une main 20 d'un contrôleur. Ce boîtier peut être conçu de manière à être intégralement portatif, facilitant ainsi le travail du contrôleur qui peut ainsi se déplacer avec le dispositif de contrôle à la main.

L'écran de visualisation 2 permet l'affichage de différentes fonctionnalités, et plus particulièrement d'une simulation 4 d'un élément de sécurité nominal associé au document sécurisé dont le contrôleur est sur le point de vérifier l'authenticité.

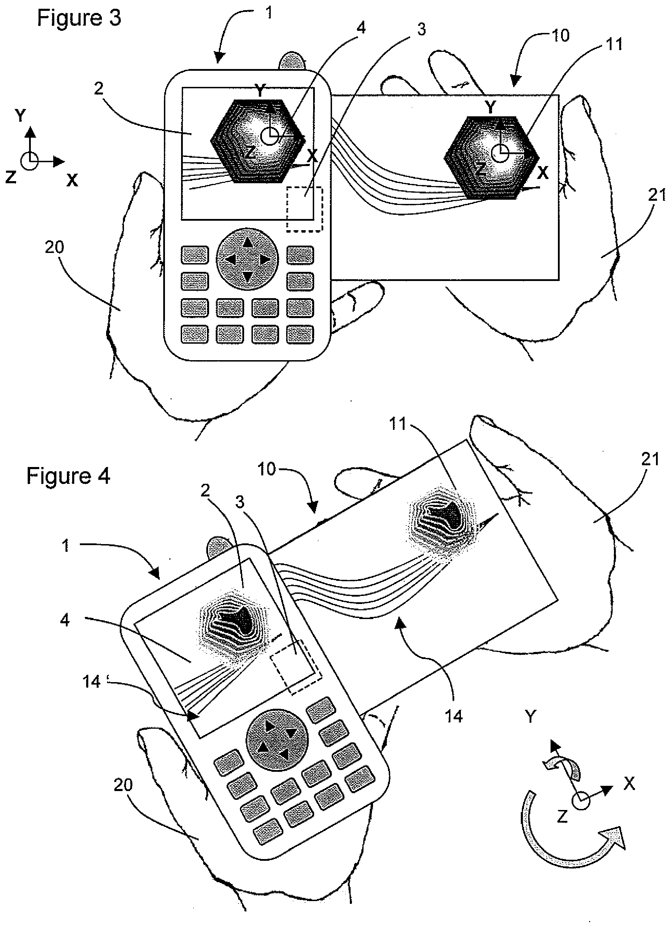

Avantageusement, la simulation reproduit (figure 4) également ledit au moins un élément graphique non variable 14. On affiche donc une simulation d'un élément graphique non variable nominal 14' associé audit élément graphique non variable 14. Cette caractéristique permet également de situer l'élément de sécurité graphiquement variable 11 sur le support 12 et de donner un effet de contraste avec celui-ci, ce qui est particulièrement avantageux dans le cas où l'élément de sécurité optiquement variable 11 est un hologramme transparent ou partiellement dé-métallisé. Grâce à cette caractéristique, la simulation reproduit l'élément de sécurité optiquement variable 11 dans son contexte réel, c'est-à-dire l'ensemble des éléments présents sur le support 12 de l'objet 10, ce qui ajoute également un niveau de sécurité audit objet 10.

Le senseur de position 3 est intégré au dispositif 1 de sorte à fournir des informations sur l'orientation spatiale de celui-ci suivant les trois directions de l'espace.

Les moyens de saisie peuvent être constitués de touches de gestion directionnelle 5' et de touches de saisie de données 5", afin notamment de permettre une recherche d'une simulation 4 et/ou une manipulation graphique de la simulation 4.

Dans ce mode de réalisation, des moyens de communication sont prévus de sorte que le dispositif 1 puisse communiquer avec un dispositif 30 intégrant au moins un serveur 31 - dédié ou pas - et comportant un moyen de communication 32 adéquat. Cette communication peut s'opérer via un réseau de télécommunication 40, par exemple Internet ou un réseau local. On assure ainsi un téléchargement possible des simulations des derniers éléments de sécurité nominaux créés ou mis à jour et dont des documents peuvent être munis, de sorte qu'un contrôleur ait accès de manière rapide à ces simulations sans nécessité d'autre mesure qu'une simple recherche et un téléchargement, là où les solutions de l'art antérieur impliquaient une fastidieuse recherche parmi des éléments nominaux sur support physique, sans certitude quant à la disponibilité de l'élément nominal souhaité.

En plus de ce type d'accessibilité à la simulation d'un élément nominal, il peut être prévu que certaines simulations soient rendues disponibles au niveau de moyens de stockage dont est équipé le dispositif. Les simulations correspondantes sont ainsi instantanément accessibles par saisie d'une référence alphanumérique.

Une autre possibilité pour accéder à la simulation d'un élément nominal consiste en la capture, avec des moyens de capture équipant le dispositif 1, d'une image correspondant à l'élément 11 à contrôler. Cette image peut être traitée de sorte à déterminer l'élément nominal associé et en déduire la simulation à afficher. L'homme du métier notera ici que d'autres possibilités pour accéder à une simulation peuvent être aisément déterminées sans pour autant sortir du cadre du brevet.

Chaque simulation 4 est générée puis affichée sur l'écran 2 via les moyens de génération et d'affichage (non représentés) faisant l'objet de la présente invention. La génération peut être complétée par exemple à l'aide des moyens de communication et/ou des moyens de stockage décrits ci-dessus. Ces moyens de génération et d'affichage peuvent se présenter sous la forme d'un processeur ou microprocesseur intégré au boîtier du dispositif et programmé de manière à exécuter un programme de gestion de la génération et de l'affichage d'une simulation.

Ces moyens de génération et d'affichage sont conçus de manière à permettre, d'une part, l'affichage de la simulation d'un élément de sécurité nominal sur l'écran 2 et, d'autre part, la prise en compte de l'orientation spatiale ou du mouvement du dispositif au moment de cet affichage. Pour cela, ces moyens collaborent avec le senseur de position et/ou de mouvement 3, ce dernier lui fournissant en temps réel des informations de positionnement ou de mouvement selon les trois directions de l'espace. Les moyens de génération et d'affichage intègrent alors ces informations pour déterminer la forme de la simulation à afficher. Cette forme consiste plus particulièrement en l'intensité lumineuse, la (ou les) couleur(s), l'animation ou les angles de vues de l'élément simulé.

Cette prise en compte assure une simulation à plusieurs niveaux de l'élément nominal, puisque ce dernier est apte à produire des effets optiques en fonction notamment de son orientation et des mouvements qui lui sont appliqués. L'homme du métier notera ici que d'autres paramètres peuvent influer sur la forme de l'élément de sécurité à contrôler, notamment les conditions d'éclairage de celui-ci, et que de tels paramètres peuvent être également pris en compte lors de la génération et l'affichage de l'élément simulé.

Dès lors, lorsqu'un contrôleur qui manipule le dispositif 1 requiert la génération et l'affichage de la simulation de l'élément de sécurité nominal associé à celui qu'il vérifie, cette simulation est affichée sur l'écran 2. Lorsqu'il réoriente le dispositif 1 dans différentes directions de l'espace, cette nouvelle orientation et/ou les mouvements qui la permette sont mesurés par le senseur 3 puis communiquées aux moyens de gestion et d'affichage, qui les intègrent pour afficher une nouvelle simulation de cet élément nominal, qui est celle qui correspond à l'élément simulé pour cette nouvelle orientation et pour les mouvement qui lui sont appliqués. Le contrôle n'est donc pas seulement statique, mais il est aussi dynamique.

On décrit maintenant l'utilisation de ce dispositif selon l'invention en vue de comparer la simulation générée et affichée avec l'élément de sécurité à contrôler, en référence aux figures 3 et 4.

Lors d'un contrôle, le contrôleur manipule le dispositif 1 et l'objet sécurisé 10 suivant des directions sensiblement égales, et les dispose l'un à côté de l'autre. En fonction des dispositions de ce contrôleur, il peut être amené à manipuler le dispositif 1 avec une main 20 et le document 10 avec son autre main 21.

Lorsque l'élément de sécurité 11 à contrôler est authentique, il présente le même aspect que l'élément de sécurité nominal associé originellement à l'objet 10 et dont la simulation 4 est générée et affichée sur l'écran 2. Dès lors, l'élément 11 et la simulation 4 présentent sensiblement le même aspect.

La figure 3 représente une première orientation de ces deux objets. Dans le cas d'un élément 11 authentique, celui-ci présente sensiblement le même aspect que la simulation 4 pour une orientation sensiblement similaire du dispositif 1 et du document 10. Dans le cas contraire, il est probable que leurs aspects diffèrent, mais cela peut ne pas être le cas si la contrefaçon est suffisamment bien réalisée.

Pour discriminer de telles contrefaçons et ainsi ajouter un niveau de sécurisation supplémentaire, le dispositif 1 selon l'invention et le document 10 peuvent être manipulés, de façon sensiblement similaire, dans la même direction. Cette manipulation a pour effet de produire des animations, des changements de couleurs ou de points de vus, de façon dynamique, puis arrêté selon une deuxième orientation, comme illustré en figure 4. Ce changement d'orientation a pour effet de modifier les effets optiques générés par l'élément de sécurité. Si l'élément de sécurité est bien authentique, les effets dynamiques au cours de la manipulation seront sensiblement identiques et à l'arrêt dans des les mêmes orientations, les aspects de l'élément 11 et de la simulation 4 sont également sensiblement identiques. Dans le cas d'une contrefaçon frauduleuse, leurs aspects pourront dans une certaine mesure différer.

Cette vérification peut être complétée par d'autres mouvements et orientations des deux objets 1 et 10 suivies à chaque fois d'une comparaison de l'élément 11 et de la simulation 4, ce qui permet d'améliorer d'autant plus la rigueur du contrôle d'authenticité.

L'aspect dynamique du contrôle est particulièrement important. En effet, la simulation d'un hologramme a peu de chance d'être effectuée avec des réseaux strictement identiques et l'amplitude du mouvement à passer d'un point de vue de l'hologramme à un autre peuvent facilement varier dès lors que les réseaux employés ne sont pas rigoureusement semblables.

Pour améliorer également cette rigueur, il peut également être prévu que le dispositif 1 comporte des moyens de gestion de l'affichage de la simulation 4, consistant en la gestion de différents paramètres, tels que le grandissement de la simulation 4. Le contrôleur bénéficie ainsi d'une plus grande souplesse de fonctionnement du dispositif lorsqu'il effectue un contrôle.

L'homme du métier notera que la simulation 4 d'un élément de sécurité nominal doit être préalablement générée et enregistrée sur un support ad hoc, qu'il soit sous la forme d'un serveur dédié 31 ou d'une zone de stockage informatique. Grâce à cette génération préalable, le contrôleur pourra rapidement récupérer la simulation.

A cet égard, il peut être constaté que l'on dispose de différentes formes de génération d'une simulation, ces formes pouvant être utilisées de manière indifférente du moment que le dispositif 1 est apte à les lire. Notons tout de même les formes suivantes :
- une série d'images de synthèse obtenues par simulation informatique du comportement optique de l'élément de sécurité nominal,
- une séquence vidéo filmée à partir de l'élément de sécurité nominal,
- une série de poses fixes (photos ou images de synthèse) obtenues à partir de l'élément de sécurité nominal.

Ainsi conçu, un dispositif de contrôle selon un mode de réalisation de l'invention décrit ci-dessus permet la mise en oeuvre d'un procédé de contrôle offrant une souplesse et une rapidité de vérification d'un document sécurisé que n'atteint pas les solutions connues de l'art antérieur.

Ce procédé comporte tout d'abord une étape de génération, sur le dispositif de contrôle 1, d'une simulation 4 de l'élément de sécurité nominal associé à l'objet sécurisé 10. Lors d'une étape ultérieure, il est ensuite procédé à l'affichage de cette simulation 4 sur l'écran de visualisation 2 du dispositif 1, cet affichage étant fonction du mouvement et/ou de l'orientation du dispositif 1 déterminée par le senseur de mouvement et/ou de position 3 intégré à celui-ci. Une dernière étape consiste enfin en une comparaison entre l'élément 11 du document 10 à contrôler et la simulation 4 pour des manipulations respectives sensiblement identiques de ces derniers.

## Revendications

1. Procédé de contrôle optique dynamique, pour l'authentification d'un objet sécurisé (10) par un contrôleur équipé d'un dispositif (1) équipé d'un module comprenant des moyens (3) de mesure de l'orientation et/ou de mouvement dudit module, et un écran de visualisation (2), ledit objet (10) étant muni d'au moins un élément de sécurité (11) optiquement variable, apte à générer des effets optiques fonctions de son orientation et/ou de son mouvement relativement au contrôleur, et optionnellement au moins un élément graphique non variable (14) **caractérisé en ce qu'**il comporte des étapes consistant à :
- manipuler le dispositif (1) selon une pluralité d'orientations ou de mouvements,
- mesurer des informations de positionnement ou de mouvement du dispositif (1) par les moyens (3) de mesure de l'orientation et/ou de mouvement dudit module,
- afficher une simulation (4) d'un élément de sécurité nominal associé à l'objet sécurisé (10), et optionnellement d'un élément graphique non variable nominal (14') associé audit élément graphique non variable (14), sur l'écran de visualisation (2), l'affichage étant fonction de l'orientation et/ou du mouvement dudit module relativement au contrôleur, et
- comparer les effets optiques de l'élément de sécurité (11) à ceux de la simulation (4) lorsque l'orientation et/ou le mouvement relatif au contrôleur de l'élément de sécurité (11) et du module sont les mêmes.

2. Procédé selon la revendication 1, comprenant en outre une étape consistant à :
- générer ladite simulation localement sur le dispositif de contrôle (1) ou à distance de celui-ci, le procédé comprenant dans ce cas en outre une étape de téléchargement de ladite simulation sur ledit dispositif (1).

3. Procédé selon la revendication 2, comprenant en outre une étape consistant à :
- stocker, éventuellement au préalable, ladite simulation dans une mémoire accessible audit dispositif (1).

4. Procédé selon l'une quelconque des revendications précédentes, comprenant en outre une étape préalable consistant à :
- sélectionner ladite simulation (4) d'un élément de sécurité nominal associé à l'objet sécurisé (10) parmi un ensemble de simulations d'éléments de sécurité nominaux associés à d'autres objets sécurisés.

5. Procédé selon la revendication 4, dans lequel l'étape de sélection comprend des étapes consistant à :
- identifier le type ou la référence dudit élément de sécurité (11) par la mesure d'un paramètre optique et/ou la lecture d'un identifiant dudit élément de sécurité (11), et
- rechercher le type ou la référence correspondant parmi ledit ensemble de simulations d'éléments de sécurité nominaux.

6. Procédé selon la revendication 4, dans lequel l'étape de sélection comprend des étapes consistant à :
- saisir sur des moyens de saisie (5',5") dudit dispositif (1), un identifiant dudit élément de sécurité (11), et
- rechercher le type ou la référence correspondant parmi ledit ensemble de simulations d'éléments de sécurité nominaux.

7. Procédé selon l'une quelconque des revendications précédentes, comprenant en outre une étape consistant à :
- appliquer une orientation et/ou un mouvement relatif au contrôleur sensiblement identique(s) audit élément de sécurité (11) et audit module du dispositif de contrôle (1).

8. Procédé selon la revendication 6, dans lequel les mouvements relatifs au contrôleur dudit élément de sécurité (11) et dudit module du dispositif de contrôle (1) sont sensiblement synchrones.

9. Procédé selon l'une quelconque des revendications précédentes, dans lequel l'étape de comparaison des effets optiques comprend l'estimation et/ou la mesure et/ou la détection d'au moins un des aspects suivants :
- changement de couleur en fonction de l'orientation,
- changement d'angles de vues d'un hologramme tridimensionnel,
- déplacement d'un élément dune image dudit élément de sécurité (11),
- changement d'aspect d'une image dudit élément de sécurité (11),
- effacement d'une image dudit élément de sécurité (11) et remplacement éventuel par une autre.

10. Procédé selon l'une quelconque des revendications précédentes, dans lequel l'étape de comparaison est mise en oeuvre dynamiquement, la simulation (4) dudit élément de sécurité nominal affichée sur ledit écran de visualisation (2) reproduisant l'orientation et/ou le mouvement dudit module à chaque instant.

11. Programme d'ordinateur, comprenant des instructions de code de programme pour l'exécution des étapes du procédé selon l'une quelconque des revendications 1 à 5 et 7 à 10, lorsque ledit programme est exécuté sur un ordinateur.

12. Dispositif (1) de contrôle optique, pour l'authentification d'un objet sécurisé (10) par un contrôleur équipé dudit dispositif (1),
Ledit dispositif (1) étant équipé d'un module comprenant des moyens (3) de mesure de l'orientation et/ou de mouvement dudit module, et un écran de visualisation (2), pour la mise en oeuvre du procédé selon l'une quelconque des revendications 1 à 5 et 7 à 10,
**caractérisé en ce que** ledit dispositif (1) comporte en outre:
- des moyens pour afficher une simulation (4) d'un élément de sécurité nominal associé à l'objet sécurisé (10) sur l'écran de visualisation (2) dudit dispositif de contrôle (1), configurés pour que l'affichage soit fonction de l'orientation et/ou du mouvement dudit module, et
- des moyens de communication avec un dispositif (30) intégrant au moins un serveur (31) pour assurer un téléchargement de simulations d'éléments nominaux créés ou mis à jour,
- ledit dispositif (1) pouvant être autonome et au moins en partie portatif..

13. Dispositif de contrôle optique selon la revendication 12, dans lequel les moyens (3) de mesure de l'orientation et/ou de mouvement dudit module comprennent un senseur de position et/ou de mouvement (3) intégré audit dispositif (1).

14. Dispositif de contrôle optique selon l'une quelconque des revendications 12 à 13, dans lequel au moins une simulation (4) se présente sous la forme :
- d'une série d'images de synthèse obtenues par simulation informatique du comportement optique de l'élément de sécurité nominal, ou
- d'une séquence vidéo filmée à partir de l'élément de sécurité nominal,
- d'une série de poses fixes obtenues à partir de l'élément de sécurité nominal.

15. Système de contrôle optique comprenant le dispositif (1) de contrôle optique selon l'une quelconque des revendications 12 à 14, et un objet (10) muni d'au moins un élément de sécurité (11) optiquement variable, apte à générer des effets optiques fonctions de son orientation et/ou de son mouvement relativement à un contrôleur manipulant ledit objet (10), et optionnellement au moins un élément graphique non variable (14), ledit système étant apte à mettre en oeuvre le procédé selon l'une quelconque des revendications 1 à 11.

## Patentansprüche

1. Verfahren zur dynamischen optischen Überprüfung zur Authentifizierung eines gesicherten Objekts (10) durch einen Prüfer, der mit einer Vorrichtung (1) ausgerüstet ist, die mit einem Modul, das Mittel (3) zur Messung der Ausrichtung und/oder Bewegung dieses Moduls umfasst, und einem Anzeigebildschirm (2) ausgerüstet ist, wobei das Objekt (10) mit wenigstens einem optisch variablen Sicherheitselement (11), das in der Lage ist, optische Effekte zu erzeugen, die von seiner Ausrichtung und/oder von seiner Bewegung relativ zu dem Prüfer abhängen, und optional mit wenigstens einem nicht variablen graphischen Element (14) ausgestattet ist, **dadurch gekennzeichnet, dass** es folgende Schritte umfasst:
- Handhaben der Vorrichtung (1) gemäß mehreren Ausrichtungen oder Bewegungen,
- Messen der Positionierungs- oder Bewegungsinformationen der Vorrichtung (1) durch die Mittel (3) zur Messung der Ausrichtung und/oder Bewegung des Moduls,
- Anzeigen einer Simulation (4) eines nominalen Sicherheitselements, das dem gesicherten Objekt (10) zugeordnet ist, und optional eines nominalen nicht variablen graphischen Elements (14'), das dem nicht variablen graphischen Element (14) zugeordnet ist, auf dem Anzeigebildschirm (2), wobei die Anzeige von der Ausrichtung und/oder der Bewegung des Moduls relativ zu dem Prüfer abhängt, und
- Vergleichen der optischen Effekte des Sicherheitselements (11) mit denjenigen der Simulation (4), wenn die Ausrichtung und/oder die Bewegung des Sicherheitselements (11) und des Moduls relativ zu dem Prüfer dieselben sind.

2. Verfahren nach Anspruch 1, welches außerdem folgenden Schritt umfasst:
- Erzeugen der Simulation lokal auf der Überprüfungsvorrichtung (1) oder entfernt von dieser, wobei das Verfahren in diesem Fall außerdem einen Schritt des Herunterladens der Simulation auf die Vorrichtung (1) umfasst.

3. Verfahren nach Anspruch 2, welches außerdem folgenden Schritt umfasst:
- Speichern, eventuell im Voraus, der Simulation in einem Speicher, der für die Vorrichtung (1) zugänglich ist.

4. Verfahren nach einem der vorhergehenden Ansprüche, welches außerdem folgenden vorausgehenden Schritt umfasst:
- Auswählen der Simulation (4) eines nominalen Sicherheitselements, das dem gesicherten Objekt (10) zugeordnet ist, aus einer Menge von Simulationen von nominalen Sicherheitselementen, die anderen gesicherten Objekten zugeordnet sind.

5. Verfahren nach Anspruch 4, wobei der Schritt der Auswahl folgende Schritte umfasst:
- Identifizieren des Typs oder Kennzeichens des Sicherheitselements (11) durch die Messung eines optischen Parameters und/oder das Lesen einer Kennung des Sicherheitselements (11), und
- Suchen nach dem entsprechenden Typ oder Kennzeichen in der Menge von Simulationen von nominalen Sicherheitselementen.

6. Verfahren nach Anspruch 4, wobei der Schritt der Auswahl folgende Schritte umfasst:
- Erfassen, mit Erfassungsmitteln (5', 5") der Vorrichtung (1), einer Kennung des Sicherheitselements (11), und
- Suchen nach dem entsprechenden Typ oder Kennzeichen in der Menge von Simulationen von nominalen Sicherheitselementen.

7. Verfahren nach einem der vorhergehenden Ansprüche, welches außerdem folgenden Schritt umfasst:
- Anwenden einer im Wesentlichen identischen Ausrichtung und/oder Bewegung relativ zu dem Prüfer auf das Sicherheitselement (11) und auf das Modul der Überprüfungsvorrichtung (1).

8. Verfahren nach Anspruch 6, wobei die Bewegungen des Sicherheitselements (11) und des Moduls der Überprüfungsvorrichtung (1) relativ zu dem Prüfer im Wesentlichen synchron sind.

9. Verfahren nach einem der vorhergehenden Ansprüche, wobei der Schritt des Vergleichs der optischen Effekte die Schätzung und/oder die Messung und/oder die Detektion wenigstens eines der folgenden Aspekte umfasst:
- Änderung der Farbe in Abhängigkeit von der Ausrichtung,
- Änderung von Winkeln von Ansichten eines dreidimensionalen Hologramms,
- Verschiebung eines Elements eines Bildes des Sicherheitselements (11),
- Änderung des Aussehens eines Bildes des Sicherheitselements (11),
- Löschung eines Bildes des Sicherheitselements (11) und eventuelles Ersetzen durch ein anderes.

10. Verfahren nach einem der vorhergehenden Ansprüche, wobei der Schritt des Vergleichs dynamisch durchgeführt wird, wobei die Simulation (4) des nominalen Sicherheitselements, die auf dem Anzeigebildschirm (2) angezeigt wird, zu jedem Zeitpunkt die Ausrichtung und/oder die Bewegung des Moduls wiedergibt.

11. Computerprogramm, welches Programmcodeanweisungen zur Ausführung der Schritte des Verfahrens nach einem der Ansprüche 1 bis 5 und 7 bis 10, wenn das Programm auf einem Computer ausgeführt wird, umfasst.

12. Vorrichtung (1) zur optischen Überprüfung zur Authentifizierung eines gesicherten Objekts (10) durch einen Prüfer, der mit der Vorrichtung (1) ausgerüstet ist,
wobei die Vorrichtung (1) mit einem Modul, das Mittel (3) zur Messung der Ausrichtung und/oder Bewegung dieses Moduls umfasst, und einem Anzeigebildschirm (2) ausgerüstet ist, zur Durchführung des Verfahrens nach einem der Ansprüche 1 bis 5 und 7 bis 10,
**dadurch gekennzeichnet, dass** die Vorrichtung (1) außerdem aufweist:
- Mittel zum Anzeigen einer Simulation (4) eines nominalen Sicherheitselements, das dem gesicherten Objekt (10) zugeordnet ist, auf dem Anzeigebildschirm (2) der Überprüfungsvorrichtung (1), welche dafür ausgelegt sind, dass die Anzeige in Abhängigkeit von der Ausrichtung und/oder der Bewegung des Moduls erfolgt,
- Mittel zur Kommunikation mit einer Vorrichtung (30), in die wenigstens ein Server (31) integriert ist, zum Sicherstellen eines Herunterladens von Simulationen von erzeugten oder aktualisierten nominalen Elementen,
- wobei die Vorrichtung (1) autonom und wenigstens teilweise tragbar sein kann.

13. Vorrichtung zur optischen Überprüfung nach Anspruch 12, wobei die Mittel (3) zur Messung der Ausrichtung und/oder Bewegung des Moduls einen Positions- und/oder Bewegungssensor (3) umfassen, der in die Vorrichtung (1) integriert ist.

14. Vorrichtung zur optischen Überprüfung nach einem der Ansprüche 12 bis 13, wobei wenigstens eine Simulation (4) in der Form vorliegt:
- einer Reihe von Synthesebildern, die durch Softwaresimulation des optischen Verhaltens des nominalen Sicherheitselements erhalten wurden, oder
- einer Videosequenz, die ausgehend von dem nominalen Sicherheitselement gefilmt wurde,
- einer Reihe von unbewegten Aufnahmen, die ausgehend von dem nominalen Sicherheitselement erhalten wurden.

15. System zur optischen Überprüfung, welches die Vorrichtung (1) zur optischen Überprüfung nach einem der Ansprüche 12 bis 14 und ein Objekt (10), das mit wenigstens einem optisch variablen Sicherheitselement (11), das in der Lage ist, optische Effekte zu erzeugen, die von seiner Ausrichtung und/oder von seiner Bewegung relativ zu einem das Objekt (10) handhabenden Prüfer abhängen, und optional mit wenigstens einem nicht variablen graphischen Element (14) ausgestattet ist, umfasst, wobei das System in der Lage ist, das Verfahren nach einem der Ansprüche 1 bis 11 durchzuführen.

## Claims

1. Dynamic optical verification method for the authentication of a secure object (10) by an inspector equipped with a device (1) equipped with a module comprising means (3) for measuring the orientation and/or movement of said module, and a viewing screen (2), said object (10) being provided with at least one optically variable security element (11) that is able to generate optical effects depending on its orientation and/or its movement relative to the inspector, and optionally at least one non-variable graphic element (14), **characterized in that** it includes steps consisting in:
- handling the device (1) so as to subject it to a plurality of orientations or movements,
- measuring information on the position or movement of the device (1) using the means (3) for measuring the orientation and/or movement of said module,
- displaying a simulation (4) of a nominal security element associated with the secure object (10) and optionally a nominal non-variable graphic element (14') associated with said non-variable graphic element (14) on the viewing screen (2), the display depending on the orientation and/or on the movement of said module relative to the inspector, and
- comparing the optical effects of the security element (11) to those of the simulation (4) when the orientation and/or the movement, relative to the inspector, of the security element (11) and of the module are the same.

2. Method according to Claim 1, furthermore comprising a step consisting in:
- generating said simulation locally on the verification device (1) or remotely therefrom, the method in this case furthermore comprising a step of downloading said simulation onto said device (1).

3. Method according to Claim 2, furthermore comprising a step consisting in:
- storing, possibly beforehand, said simulation in a memory accessible to said device (1).

4. Method according to any one of the preceding claims, furthermore comprising a preliminary step consisting in:
- selecting said simulation (4) of a nominal security element associated with the secure object (10) from among a set of simulations of nominal security elements that are associated with other secure objects.

5. Method according to Claim 4, wherein the selection step comprises steps consisting in:
- identifying the type or the reference of said security element (11) by measuring an optical parameter and/or reading an identifier of said security element (11), and
- looking up the corresponding type or reference from among said set of simulations of nominal security elements.

6. Method according to Claim 4, wherein the selection step comprises steps consisting in:
- inputting, on input means (5', 5") of said device (1), an identifier of said security element (11), and
- looking up the corresponding type or reference from among said set of simulations of nominal security elements.

7. Method according to any one of the preceding claims, furthermore comprising a step consisting in:
- applying a substantially identical orientation and/or movement, relative to the inspector, to said security element (11) and to said module of the verification device (1).

8. Method according to Claim 6, wherein the movements, relative to the inspector, of said security element (11) and of said module of the verification device (1) are substantially synchronous.

9. Method according to any one of the preceding claims, wherein the step of comparing the optical effects comprises the estimation and/or the measurement and/or the detection of at least one of the following aspects:
- change of colour depending on the orientation,
- change of viewing angles of a three-dimensional hologram,
- displacement of an element of an image of said security element (11),
- change of an aspect of an image of said security element (11),
- erasure of an image of said security element (11) and possible replacement by another one.

10. Method according to any one of the preceding claims, wherein the comparison step is implemented dynamically, the simulation (4), displayed on said viewing screen (2), of said nominal security element reproducing the orientation and/or the movement of said module at each instant.

11. Computer program, comprising program code instructions for executing the steps of the method according to any one of Claims 1 to 5 and 7 to 10 when said program is executed on a computer.

12. Optical verification device (1) for the authentication of a secure object (10) by an inspector equipped with said device (1),
said device (1) being equipped with a module comprising means (3) for measuring the orientation and/or movement of said module, and a viewing screen (2), for implementing the method according to any one of Claims 1 to 5 and 7 to 10, **characterized in that** said device (1) furthermore includes:
- means for displaying a simulation (4) of a nominal security element associated with the secure object (10) on the viewing screen (2) of said verification device (1) that are configured such that the display depends on the orientation and/or the movement of said module, and
- means for communicating with a device (30) incorporating at least one server (31) in order to download simulations of created or updated nominal elements,
- said device (1) being able to be autonomous and portable at least in part.

13. Optical verification device according to Claim 12, wherein the means (3) for measuring the orientation and/or movement of said module comprise a position and/or motion sensor (3) integrated into said device (1).

14. Optical verification device according to either one of Claims 12 and 13, wherein at least one simulation (4) takes the form:
- of a series of computer-generated images that are obtained by computerized simulation of the optical behaviour of the nominal security element, or
- of a filmed video sequence based on the nominal security element,
- of a series of fixed poses that are obtained from the nominal security element.

15. Optical verification system comprising the optical verification device (1) according to any one of Claims 12 to 14 and an object (10) provided with at least one optically variable security element (11) that is able to generate optical effects depending on its orientation and/or its movement relative to an inspector handling said object (10), and optionally at least one non-variable graphic element (14), said system being able to implement the method according to any one of Claims 1 to 11.
